# EUROPEAN PATENT APPLICATION

(11) **EP 4 329 371 A1**
(43) Date of publication of application: **28.02.2024**
(21) Application number: 22819246.4
(22) Date of filing: 29.04.2022
(51) Int. Cl.: H04W 36/30

(54) **RECOVERY METHOD FOR DATAFLOW INTERRUPTION, AND TERMINAL AND STORAGE MEDIUM**

(30) Priority: 07.06.2021 CN 202110630174
(71) Applicant: ZTE Corporation, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Zoli, Filippo
(86) International application number: PCT/CN2022/090479
(87) International publication number: WO 2022/257644

(57) **Abstract**

Provided in the embodiments of the present disclosure are a recovery method for dataflow interruption, and a terminal and a storage medium. The method comprises: detecting dataflow interruption by taking a PDU session as a unit; upon monitoring that the PDU session is subjected to the dataflow interruption, determining, at first, whether the PDU session that is subjected to the dataflow interruption meets a session switching condition, instead of immediately reconnecting to a network to perform a data connection recovery operation; and switching the PDU session when the session switching condition is satisfied.

## Description

### CROSS-REFERENCE TO RELATED APPLICATION

This disclosure claims priority to Chinese Patent Application CN 202110630174.6, entitled "METHOD FOR INTERRUPTED DATA TRAFFIC RECOVERY, TERMINAL DEVICE AND STORAGE MEDIUM", filed on June 7, 2021, the entire contents of which are incorporated herein by reference.

### TECHNICAL FIELD

Embodiments of the present disclosure relate to, but not limited to, the field of communication, and in particular to, but not limited to, a recovery method for data traffic interruption, a terminal device, and a storage medium.

### BACKGROUND

Intelligent terminal devices have become important tools in people's daily lives. Many applications in people's businesses, lives and entertainment have been extended and multiplied with the development of intelligent terminal devices. Once the data traffic of a terminal device is interrupted (that is, the data connection and data transmission established between the intelligent terminal device and a network side fail), it will bring a lot of inconvenience to a user's life. In order to improve the user experience, after the intelligent terminal device establishes network channel connection with the network side (i.e., establishing data connection), it is continuously detected whether data traffic interruption occurs in a network channel established with the network side. When data traffic interruption is detected, data connection will be recovered by reconnecting to the network to clear all data connections. However, after the intelligent terminal device establishes a network channel with the network side, the terminal device may establish a plurality of PDU (Protocol Data Unit) sessions with the network side through the network channel. When the intelligent terminal device detects interruption in the network channel, it is possible that only the data traffic of part of the PDU sessions on the network channel is interrupted. Therefore, the operation of directly reconnecting to the network for data connection recovery will reset the other normal PDU sessions on the network channel, resulting in unsatisfactory service continuity and low user experience satisfaction.

### SUMMARY

Embodiments of the present disclosure provide a recovery method for data traffic interruption, a terminal device, and a storage medium. The technical problem to be solved is that in the existing technology, directly reconnecting to a network for data connection recovery in response to a detection of data traffic interruption will result in the resetting of normal PDU sessions.

An embodiment of the present disclosure provides a recovery method for data traffic interruption. The method includes: detecting data traffic interruption in a Protocol Data Unit (PDU) session; determining whether the PDU session currently meets a session switching condition; and in response to a determination that the PDU session currently meets the session switching condition, switching the PDU session.

An embodiment of the present disclosure further provides a terminal device. The device includes a memory, a processor, and a communication bus connecting the memory with the processor. The memory stores one or more computer programs which, when executed by the processor, cause the processor to implement the recovery method for data traffic interruption as described above.

An embodiment of the present disclosure further provides a computer-readable storage medium, storing one or more computer programs which, when executed by one or more processors, cause the one or more processors to implement the recovery method for data traffic interruption as described above.

Other features and corresponding beneficial effects of the present disclosure will be illustrated later in the description, and it should be understood that at least part of the beneficial effects will become apparent from the description of the present disclosure.

### BRIEF DESCRIPTION OF DRAWINGS

Fig. 1 is a schematic flowchart of a recovery method for data traffic interruption according to Embodiment one of the present disclosure;
Fig. 2 is a schematic flowchart of a data connection recovery mode according to Embodiment one of the present disclosure;
Fig. 3 is a schematic flowchart of another data connection recovery mode according to Embodiment one of the present disclosure;
Fig. 4 is a schematic structural diagram of a recovery device for data traffic interruption according to Embodiment two of the present disclosure;
Fig. 5 is a schematic diagram of an Access Traffic Steering, Switching, Splitting (ATSSS) function according to Embodiment two of the present disclosure;
Fig. 6 is a schematic flowchart of a recovery method for data traffic interruption according to Embodiment two of the present disclosure; and
Fig. 7 is a schematic structural diagram of a terminal device according to Embodiment three of the present disclosure.

### DETAILED DESCRIPTION

Objective, technical scheme and advantages of the present disclosure will be clearer from a detailed description of the embodiments of the present disclosure in conjunction with the accompanying drawings. It should be understood that the embodiments described herein are merely used to illustrate the present disclosure, and are not intended to limit the present disclosure.

### Embodiment one

In related technology, after a terminal device establishes network channel connection with a network side, data traffic interruption is detected based on network channels. For example, after the terminal device establishes a cellular network channel and a Wireless Fidelity (Wi-Fi) network channel with the network side, it is configured to detect whether data traffic interruption occurs in the cellular network channel and the Wi-Fi network channel. If so, data traffic is recovered directly by reconnecting to the network. In this case, it is possible that only data traffic of part of the PDU sessions on the network channels is interrupted. Therefore, the operation of directly reconnecting to the network for data connection recovery will reset the other normal PDU sessions on the network channels, resulting in unsatisfactory service continuity and low user experience satisfaction. Therefore, this embodiment provides a new recovery method for data traffic interruption, in which a terminal device is configured to detect data traffic interruption based on PDU sessions instead of network channels, thereby providing a fine-grained detection. Therefore, a specific PDU session with data traffic interruption can be located, which is more conducive to the accurate control of subsequent data connection recovery. When it is detected that data traffic interruption occurs in a PDU session, it is configured to determine whether the PDU session with data traffic interruption meets a session switching condition, instead of immediately reconnecting to the network for data connection recovery. If so, the PDU session is switched. Thus, the resetting of other normal PDU sessions as a result of reconnecting to the network for data connection recovery operations can be prevented, and the PDU session with data traffic interruption can be switched to another channel for normal operation, thereby increasing the efficiency and accuracy of data connection recovery, ensuring the continuity of a service, and increasing the user experience satisfaction.

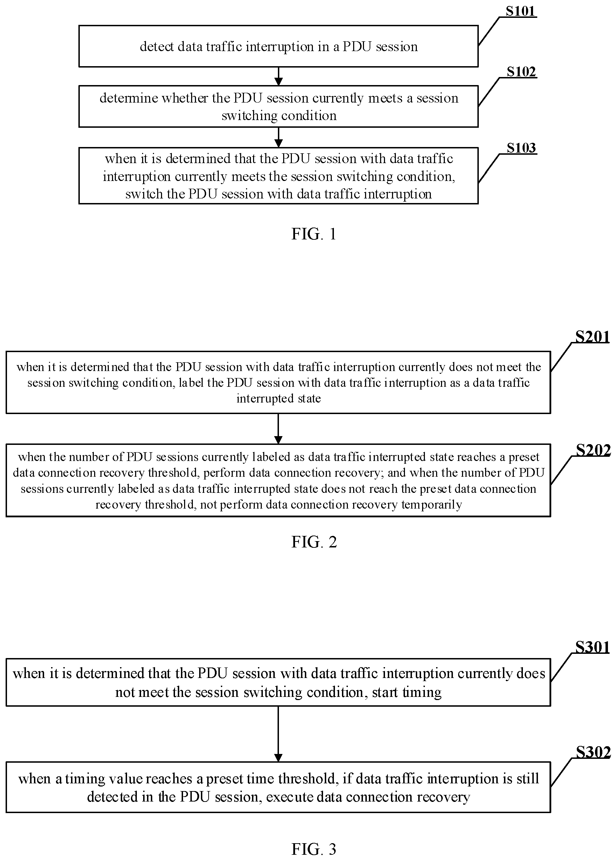

In order to facilitate understanding, the recovery method for data traffic interruption according to this embodiment will be illustrated hereinafter. Referring to Fig. 1, the method includes, but not limited to, the following steps.

At S101, data traffic interruption in a PDU session is detected.

It should be understood that prior to S101, the recovery method for data traffic interruption further includes: establishing, by a terminal device, network channel connection with a network side, and establishing at least one PDU session on the network channel. In this embodiment, one or more network channel connections may be established between the terminal device and the network side. The terminal device is configured to detect, based on an PDU session instead of a network channel, whether data traffic interruption occurs in at least part of the currently established PDU sessions (for example, in some application scenarios, the terminal device may be configured to detect whether data traffic interruption occurs in all the established PDU sessions), thereby providing a fine-grained detection. Therefore, a specific PDU session with data traffic interruption can be located, which is more conducive to the accurate control of subsequent data connection recovery.

In an example of this embodiment, the terminal device may be configured to only detect on a data plane whether data traffic interruption occurs in the PDU sessions, or only detect on a control plane whether data traffic interruption occurs in the PDU sessions. In another example of this embodiment, the terminal device may be configured to simultaneously detect on the data plane and the control plane whether data traffic interruption occurs in the PDU sessions, to provide a more comprehensive detection and improve the accuracy of detection. For example, in an application example, detecting whether data traffic interruption occurs in the PDU sessions may include, but not limited to, one of the following operations.

It is configured to detect whether a response has been received from the network side within a first preset period of time after N data messages are consecutively sent to the network side in the PDU session, and if no, it is determined that data traffic interruption occurs in the PDU session, where N is an integer value greater than or equal to 1, which may be flexibly set according to requirements, such as, but not limited to, 1, 3, 5, 7, etc., and the first preset period of time may also be flexibly set according to requirements, which will not be repeated herein.

It is configured to detect whether a Domain Name System (DNS) query corresponding to the PDU session has failed for M times within a second preset period of time is detected, and if so, it is determined that data traffic interruption occurs in the PDU session, where M is an integer value greater than or equal to 1, which may be flexibly set according to requirements, such as, but not limited to, 2, 4, 6, 8, etc. In this example, the M failures may be continuous or discontinuous, and the second preset period of time may also be flexibly set according to requirements, which will not be repeated herein.

It is configured to detect whether Packet Internet Groper (PING) detection corresponding to the PDU session has failed for K times within a third preset period of time, and if so, it is determined that data traffic interruption occurs in the PDU session, where K is an integer value greater than or equal to 1, which may be flexibly set according to requirements, such as, but not limited to, 1, 4, 5, 8, etc. In this example, the K failures may be continuous or discontinuous, and the third preset period of time may also be flexibly set according to requirements, which will not be repeated herein.

It is configured to detect whether a number of data message retransmissions in the PDU session has reached a preset message retransmission threshold within a fourth preset period of time, and if so, it is determined that data traffic interruption occurs in the PDU session, where the preset message retransmission threshold value and the fourth preset period of time may also be flexibly set according to the requirements, which will not be repeated herein.

It is configured to detect whether server detection corresponding to the PDU session fails, and if yes, it is determined that data traffic interruption occurs in the PDU session.

It is configured to detect whether a preset PDU Session Release Command message is sent by the network side for the PDU session, and if so, it is determined that data traffic interruption occurs in the PDU session. In this embodiment, the preset PDU Session Release Command message may be flexibly set according to application requirements, which may include, for example, but not limited to, a PDU Session Release Command message carrying at least one of the following causes: Network Failure; Insufficient resources for specific slice; or Insufficient resources for specific slice and DNN.

In addition, it should be understood that in some application scenarios of this embodiment, it can be determined that data traffic interruption occurs in the PDU session only when at least two of the situations described in the above example are detected in the PDU session.

At S102, it is determined whether the PDU session currently meets a session switching condition.

In an example of this embodiment, determining whether the PDU session currently meets the session switching condition includes, but not limited to: determining whether the PDU session with data traffic interruption is an Multi-Access (MA) PDU session supporting access via a plurality of network channels; and when it is determined that the PDU session with data traffic interruption is an MA PDU session, determining whether an available network channel currently presents in the plurality of network channels supported by the PDU session, and if so, determining that the MA PDU session meets the session switching condition.

In some application examples of this embodiment, the plurality of network channels supported by the MA PDU session include, but not limited to, at least one of: at least one cellular network channel; or at least one non-cellular network channel.

For example, in an application scenario, when the terminal device is in a non-standalone 5G network, the terminal device can simultaneously access the 5G network and a 4G network. In this application scenario, since the terminal device can simultaneously access the 5G network and the 4G network, the plurality of network channels supported by the MA PDU session may include a 4G network channel and a 5G network channel.

For another example, in an application scenario, the terminal device can simultaneously access a 5G network (or 4G network) and a Wi-Fi network. In this case, the plurality of network channels supported by the MA PDU session may include a 5G network channel (or 4G network channel) and a Wi-Fi network channel.

For another example, in an application scenario, the terminal device can simultaneously access a 5G network, a 4G network, and a Wi-Fi network. In this case, the plurality of network channels supported by the MA PDU session may include at least two of a 5G network channel, a 4G network channel, and a Wi-Fi network channel.

The above application scenarios are merely examples to facilitate understanding, and can be flexibly set and adjusted according to application requirements, which will not be repeated herein.

In order to facilitate understanding, in this embodiment, a mode for determining whether an available network channel currently presents in the plurality of network channels corresponding to the MA PDU session is illustrated, which may include, but not limited to, one of: determining whether a network channel not labeled as in a data traffic interrupted state presents in the plurality of network channels corresponding to the MA PDU session, and if so, determining that the network channel not labeled as in the data traffic interrupted state is an available network channel for the MA PDU session; determining whether a network channel with a normal packet loss rate (that is, the packet loss rate is less than or equal to a preset packet loss rate threshold) presents in the plurality of network channels corresponding to the MA PDU session, and if so, determining that the network channel with the normal packet loss rate is an available network channel for the MA PDU session; determining whether a network channel in which server detection is successful presents in the plurality of network channels corresponding to the MA PDU session, and if so, determining that the network channel in which server detection is successful is an available network channel for the MA PDU session; determining whether a network channel in which PING detection is successful presents in the plurality of network channels corresponding to the MA PDU session, and if so, determining that the network channel in which PING detection is successful is an available network channel for the MA PDU session; or determining whether a network channel with a measurement result of network quality (including, but not limited to, at least one of communication latency, rate, Reference Signal Received Power, Reference Signal Received Quality, Signal-to-Noise Ratio, Received Signal Strength Indicator, and other indicators) meeting a set network quality condition presents in the plurality of network channels corresponding to the MA PDU session, and if so, determining that the network channel with the measurement result of network quality meeting the set network quality condition is an available network channel for the MA PDU session.

At S103, when it is determined that the PDU session with data traffic interruption currently meets the session switching condition, the PDU session with data traffic interruption is switched, for example, to its corresponding available network channel, so that a corresponding data service can be continued. Based on these, reconnection to the network for data connection recovery operations can be avoided, which in turn avoids the resetting of the other normal PDU sessions as a result of the data connection recovery operations, and the PDU session with data traffic interruption can be switched to another channel for normal operation, thereby increasing the efficiency and accuracy of data connection recovery, ensuring the continuity of a service, and increasing the user experience satisfaction.

In this embodiment, when it is determined that the PDU session with data traffic interruption currently does not meet the session switching condition, the recovery method for data traffic interruption further includes control of data connection recovery. In this case, the control of data connection recovery in the related technology mentioned above may be adopted. However, in this embodiment, some more reasonable data connection recovery mode is provided, including, but not limited to, the following two example data connection recovery modes.

Mode one: Referring to Fig. 2, it includes, but not limited to, the following steps.

At S201, when it is determined that the PDU session with data traffic interruption currently does not meet the session switching condition, the PDU session with data traffic interruption is labeled as in a data traffic interrupted state.

At S202, when the number of PDU sessions currently labeled as in the data traffic interrupted state reaches a preset data connection recovery threshold, data connection recovery is performed; and when the number of PDU sessions currently labeled as in the data traffic interrupted state does not reach the preset data connection recovery threshold, data connection recovery will not be performed temporarily.

In this embodiment, statistics may be made based on network channels. That is, when the number of PDU sessions labeled as in the data traffic interrupted state on one network channel reaches the preset data connection recovery threshold (the data connection recovery threshold may be flexibly set to, for example, 10%, 15% or 20% of the total number of the current PDU sessions, or may be set to a fixed value, etc.), the data connection recovery operations can be performed. Moreover, the data connection recovery operations may only be performed for this network channel, but not for the other network channels currently connected with the terminal device. Of cause, the data connection recovery operations may be simultaneously performed for all the network channels.

In another example of this embodiment, the data connection recovery operations may also be performed when statistics show that the number of PDU sessions labeled as in the data traffic interrupted state on all the network channels currently connected with the terminal device reaches the preset data connection recovery threshold, and may be performed for some or all of the network channels.

In mode one, when the number of PDU sessions currently labeled as in the data traffic interrupted state does not reach the preset data connection recovery threshold, data connection recovery will not be performed temporarily to keep waiting. During waiting, the PDU session in which data traffic interruption occurred previously may be automatically recovered due to the improvement of the network environment or other factors. After the automatically recovered PDU session is detected, the label of the data traffic interrupted state can be canceled. That is, in mode one, at least part of the PDU sessions with data traffic interruption can be given some time for automatic recovery, thereby enabling a better fault tolerance performance, a reduced frequency of the data connection recovery operations, an increased ability and success rate of automatic recovery of PDU sessions with data traffic interruption and an increased utilization rate of resources.

Mode two: Referring to Fig. 3, it includes, but not limited to, the following steps.

At S301, when it is determined that the PDU session with data traffic interruption currently does not meet the session switching condition, timing is started (or equivalently, timing is started when data traffic interruption is detected in the PDU session).

At S302, when the timing value reaches a preset time threshold which can be flexibly set according to requirements, if data traffic interruption is still detected in the PDU session (that is, it is detected that the PDU session is still in the session data traffic interrupted state), data connection recovery is performed. That is, in mode two, the PDU session with data traffic interruption can be given time for automatic recovery, thereby enabling a better fault tolerance performance, a reduced frequency of the data connection recovery operations, an increased ability and success rate of automatic recovery of PDU sessions with data traffic interruption and an increased utilization rate of resources.

Of course, in some examples of this embodiment, the data connection recovery operations may be controlled according to the type of the data service that the PDU session with data traffic interruption is performed. For example, when data traffic interruption occurs in PDU sessions for some unimportant data services, the data connection recovery operations may not be performed. When data traffic interruption occurs in PDU sessions for some important data services, the data connection recovery operations may be performed immediately when the switching condition is met. The above control examples provided by this embodiment may be replaced by or extended to other control modes, which will not be described in detail herein.

In order to facilitate understanding, this embodiment illustrates the method of performing data connection recovery, including performing at least one of the following data connection recovery operations according to a set data connection recovery rule: turning off a data connection control switch and then turning it on (for example, assuming that data connection recovery is currently performed on the network channel of the 5G network to which the terminal device is connected, the 5G network data connection control switch on the terminal device may be turned off and then turned on again, and the same is true with the control methods of other networks, which will not be described in detail here); re-executing a camping procedure; restarting a radio frequency module; and restarting a modem.

In this embodiment, the set data connection recovery rule can be flexibly set. For example, the set data connection recovery rule may be set to perform the operations in a random sequence, or the above data connection recovery operations may be provided to the user for selection and performed according to the user's selection. In an example of this embodiment, in order to increase the rationality and efficiency of data connection recovery control, the data connection recovery rule includes a step-by-step execution rule, which includes: after a current data connection recovery operation is performed in a preset sequence, detecting whether a PDU session with data traffic interruption presents within a fifth preset period of time; if so, performing a next data connection recovery operation; otherwise, indicating that the data traffic interruption problem has been solved, ending the data connection recovery operations.

For example, the preset sequence may be defined to sequentially perform the following operations: turning off the data connection control switch and then turning it on, re-executing the camping procedure, restarting the radio frequency module, and restarting the modem. If the currently performed data connection recovery operation is turning off the data connection control switch and then turning it on, after the execution, it is detected whether a PDU session with data traffic interruption presents within the fifth preset period of time; if so, the camping procedure is re-executed; otherwise, it indicates that the data traffic interruption problem has been solved, and the data connection recovery operations are ended.

It should be understood that at least one step in the recovery method for data traffic interruption illustrated in this embodiment may be performed by the terminal device. The terminal device may be configured to detect data traffic interruption based on PDU sessions. When it is detected that data traffic interruption occurs in a PDU session, it is configured to determine whether the PDU session with data traffic interruption meets the session switching condition, instead of immediately reconnecting to the network for the data connection recovery operations, and if so, the PDU session is switched. Thus, reconnection to the network for the data connection recovery operations can be avoided, which in turn avoids the resetting of the other normal PDU sessions as a result of the data connection recovery operations, and the PDU session with data traffic interruption can be switched to another channel for normal operation, increasing the efficiency and accuracy of data connection recovery and ensuring the continuity of a service. When the PDU session with data traffic interruption does not meet the session switching condition, the data connection recovery operations are not performed until the current PDU session with data traffic interruption meets the set data connection recovery condition, thereby enabling a better fault tolerance performance, a reduced frequency of the data connection recovery operations, an increased ability and success rate of automatic recovery of PDU sessions with data traffic interruption and an increased utilization rate of resources.

### Embodiment two

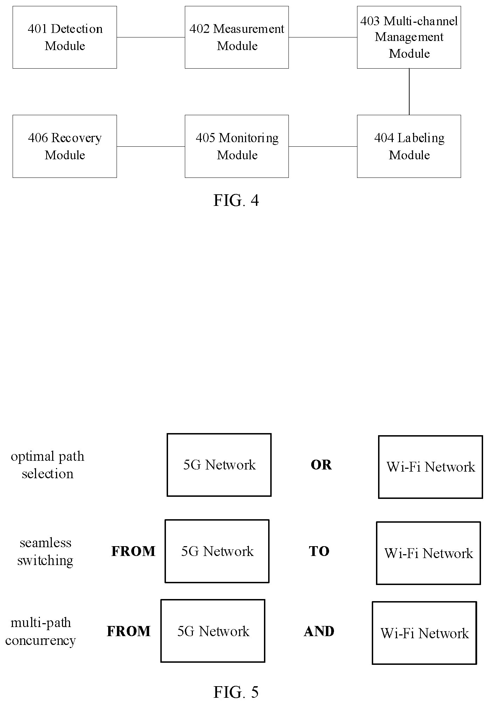

This embodiment provides a recovery device for data traffic interruption. As shown in Fig. 4, the device includes, but not limited to, following modules.

A detection module 401 is configured to detect whether data traffic interruption occurs in a Protocol Data Unit (PDU) session and whether the PDU session with data traffic interruption is a Multi-Access PDU (MA PDU) session by utilizing, but not limited to, the detection method shown in the above embodiment, which will not be repeated herein.

A measurement module 402 is configured to detect whether an available network channel presents in a plurality of network channels corresponding to the MA PDU session when the PDU session with data traffic interruption is the MA PDU session by utilizing, but not limited to, the detection method shown in the above embodiment, which will not be repeated herein.

A multi-channel management module 403 is configured to switch the MA PDU session to a corresponding available network when the measurement module 402 detects the presence of the available network channel among the plurality of network channels corresponding to the MA PDU session with data traffic interruption, and send incoming and outgoing data messages of the MA PDU session to the available network channel after switching.

A labeling module 404 is configured to label the PDU session with data traffic interruption as in a data traffic interrupted state when the PDU session does not meet a session switching condition.

A monitoring module 405 is configured to monitor whether the PDU session currently labeled as in the data traffic interrupted state meets a set data connection recovery condition, which may be, but not limited to, the condition shown in the above embodiment. They will not be repeated herein.

A recovery module 406 is configured to perform data connection recovery operations when the monitoring module 405 monitors that the data connection recovery condition is met. The execution mode may be, but not limited to, the mode described in the above example, which will not be repeated here again.

It should be understood that at least one of the above modules may be arranged on a terminal device, and a function of at least one module may be implemented by, but not limited to, a processor. Of course, in some examples, some of the modules may also be arranged on a device of the network side, which will not be described in detail here.

In order to facilitate understanding, this embodiment will be illustrated in conjunction with a specific application scenario as an example. In this application scenario, the terminal device is configured to access both a 5G network and a Wi-Fi network. The data connection recovery condition is that the number of PDU sessions in the data traffic interrupted state reaches a preset data connection recovery threshold.

For the 5G network, an Access Traffic Steering, Switching, Splitting (ATSSS) function is introduced into the 3GPP R16 version, which may also be introduced in a 4G network. The ATSSS function is mainly used for optimal path selection, seamless switching, multi-path concurrency and so on of an MA service of the terminal device. A schematic diagram is shown in Fig. 5.

For optimal path selection, the terminal device may be configured to select an optimal network path from the 5G network and the Wi-Fi network to perform the data service. For seamless switching, the terminal device may be configured to be switched from 5G network to the Wi-Fi network to perform the data service, or from the Wi-Fi network to the 5G network to perform the data service. For multi-path concurrency, the terminal device may be configured to simultaneously utilize the 5G network and the Wi-Fi network to perform the data service.

In this application example, the terminal device is configured to determine whether the 5G network supports ATSSS by detecting an ats_ind field of a Registration Accept message sent by the 5G network side. An example Registration Accept message is shown below.

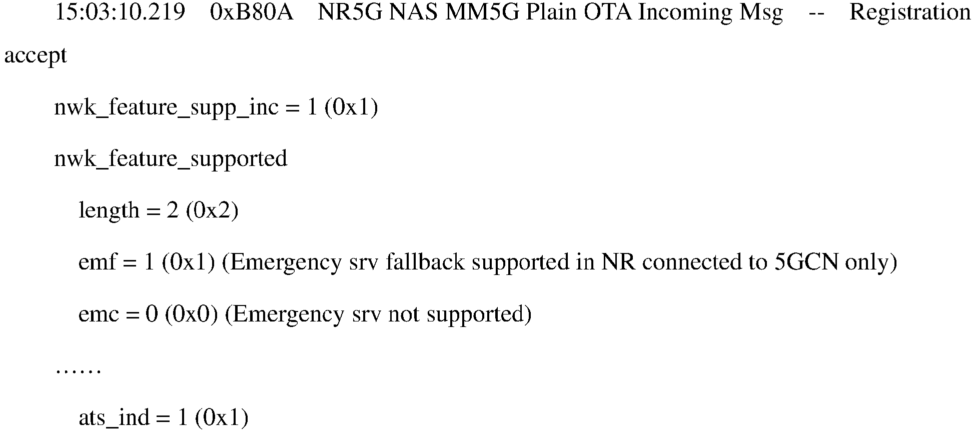

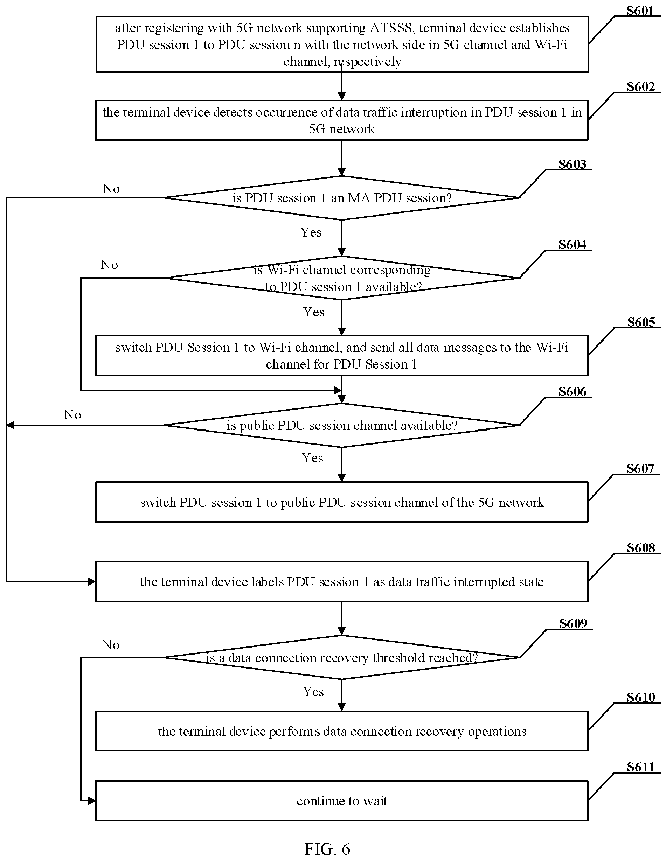

The recovery method for data traffic interruption provided by this application example is shown in Fig. 6, which includes, but not limited to, the following steps.

At S601, after registering with a 5G network supporting ATSSS, a terminal device is configured to establish PDU session 1 to PDU session n with a network side on a 5G channel and a Wi-Fi channel, respectively.

In an application scenario, the established PDU sessions may include, but not limited to, an Internet type PDU session for Internet service, an IP Multimedia Subsystem (IMS) type PDU session for IMS service, a Multimedia Messaging Service (MMS) type PDU session for MMS service, a network slice PDU session, etc.

At S602, the terminal device is configured to detect occurrence of data traffic interruption in PDU session 1 in the 5G network. In this example, the terminal device is configured to detect whether data traffic interruption occurs in a PDU session may include, but not limited to, one of: detecting whether a response has been received from the network side within a first preset period of time after N data messages are consecutively sent to the network side in the PDU session; detecting whether a DNS query corresponding to the PDU session has failed for M times within a second preset period of time; detecting whether PING detection corresponding to the PDU session has failed for K times within a third preset period of time, and if so, determining that data traffic interruption occurs in the PDU session; detecting whether a number of data message retransmissions in the PDU session reaches a preset message retransmission threshold in a fourth preset period of time; detecting whether server detection corresponding to the PDU session fails; or detecting a preset PDU Session Release Command message sent by the network side for the PDU session. In this embodiment, the preset PDU Session Release Command message may be flexibly set according to application requirements. For example, the preset PDU Session Release Command message may include, but not limited to, a PDU Session Release Command message carrying at least one of the following causes: Network Failure; Insufficient resources for specific slice; or Insufficient resources for specific slice and DNN.

According to the 3GPP TS 24.501 specification, the network side is configured to inform the terminal device through the PDU Session Release Command message that the PDU session will be released, and carry a release cause in the "5GSM cause" field, as shown in Table 1 and Table 2 below.

**Table 1 - Table 8.3.14.1.1: PDU SESSION RELEASE COMMAND message content**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | | 9.2 | | | |
| | PDU session ID | PDU session identity | M | V | 1 |
| | | 9.4 | | | |
| | PTI | Procedure transaction identity | M | V | 1 |
| | | 9.6 | | | |
| | PDU SESSION RELEASE COMMAND message identity | Message type | M | V | 1 |
| | | 9.7 | | | |
| | 5GSM cause | 5GSM cause | M | V | 1 |
| | | 9.11.4.2 | | | |
| 37 | Back-off timer value | GPRS timer 3 | O | TLV | 3 |
| | | 9.11.2.5 | | | |
| 78 | EAP message | EAP message | O | TLV-E | 7-1503 |
| | | 9.11.2.2 | | | |
| 61 | 5GSM congestion re-attempt indicator | 5GSM congestion re-attempt indicator | O | TLV | 3 |
| | | 9.11.4.21 | | | |
| 7B | Extended protocol configuration options | Extended protocol configuration options | O | TLV-E | 4-65538 |
| | | 9.11.4.6 | | | |
| D- | Access type | Access type | O | TV | 1 |
| | | 9.11.2.1A | | | |

**Table 2 - Table 9.11.4.2.1: 5GSM cause information element**

| Cause value (octet 2) | | | | | | | | |
|---|---|---|---|---|---|---|---|---|
| Bits | | | | | | | | |
| **8** | **7** | **6** | **5** | **4** | **3** | **2** | **1** | |
| 0 | 0 | 1 | 0 | 0 | 1 | 1 | 0 | Network failure |
| 0 | 1 | 0 | 0 | 0 | 0 | 1 | 1 | Insufficient resources for specific slice and DNN |
| 0 | 1 | 0 | 0 | 0 | 1 | 0 | 1 | Insufficient resources for specific slice |
| 0 | 1 | 1 | 0 | 1 | 1 | 1 | 1 | Protocol error, unspecified |

At S603, the terminal device is configured to determine whether PDU session 1 is an MA PDU session, and if so, the method proceeds to S604; otherwise, the method proceeds to S608.

In an example, in order to determine whether PDU session 1 is an MA PDU session, the terminal device may be configured to determine whether PDU sessions corresponding to a session ID of PDU session 1 have been established on a plurality of network channels, and if so, it indicates that PDU session 1 is an MA PDU session. Alternatively, an MA PDU session list may be preset or acquired, and a determination is made as to whether the PDU session with data traffic interruption is in the MA PDU session list.

At S604, the terminal device is configured to determine whether a Wi-Fi channel corresponding to PDU session 1 is available, and if so, the method proceeds to S605; otherwise, the method proceeds to S606.

At S605, the terminal device is configured to switch PDU Session 1 to the Wi-Fi channel, and all data messages are sent to the Wi-Fi channel for PDU Session 1.

At S606, the terminal device is configured to determine whether a public PDU session channel of the 5G network is available, and if so, the method proceeds to S607; otherwise, the method proceeds to S608.

At S607, the terminal device is configured to switch PDU session 1 to the public PDU session channel of the 5G network, and all data messages are sent to the public PDU session (i.e., Internet type default PDU session) channel of the 5G network for PDU session 1.

In this example, the method for the terminal device to determine whether a Wi-Fi network channel or a public PDU session channel of the 5G network is available may include, but not limited to, one of: detecting whether the Wi-Fi network channel or the public PDU session channel of the 5G network corresponding to PDU session 1 is labeled as in a data traffic interrupted state; checking statistical information of data receiving and sending of the Wi-Fi network channel or the public PDU session channel of the 5G network corresponding to PDU session 1 in a kernel to determine whether the packet loss rate is abnormal; initiating server detection in the Wi-Fi network channel or the public PDU session channel of the 5G network corresponding to PDU session 1; initiating PING operation in the Wi-Fi network channel or the public PDU session channel of the 5G network corresponding to PDU session 1; or initiating measurement in the Wi-Fi network channel or the public PDU session channel of the 5G network corresponding to PDU session 1.

According to the 3GPP TS 24.193 specification, during measurement, the terminal device is configured to send a PMFP Echo request message to the network side, and the network side is configured to reply with a PMFP Echo response message. The terminal device obtains a current RTT value by calculating a difference between a current value of a timer Tx in the PMFP Echo response message and an original value of a timer Tx in the PMFP Echo request message. Of course, at least one of indicators characterizing network quality, such as rate, RSSI or SNR, may also be measured.

At S608, the terminal device is configured to label PDU session 1 as in a data traffic interrupted state.

At S609, the terminal device is configured to determine whether the number of PDU sessions labeled as in the data traffic interrupted state reaches a data connection recovery threshold, and if so, the method proceeds to S610; otherwise, the method proceeds to S611.

S610, the terminal device is configured to perform data connection recovery operations.

In this example, the terminal device is configured to adopt a step-by-step execution rule, which includes: after the current data connection recovery operation is performed in a preset sequence, detecting whether a PDU session with data traffic interruption presents within a fifth preset period of time; if so, performing a next data connection recovery operation; otherwise, indicating that the data traffic interruption problem has been solved, and ending the data connection recovery operations. For example, the preset sequence may be defined to sequentially perform the following operations: turning off a data connection control switch and then turning it on, re-executing the camping procedure, restarting the radio frequency module, and restarting the modem. If the currently performed data connection recovery operation is turning off the data connection control switch and then turning it on, after the execution, it is configured to detect whether a PDU session with data traffic interruption presents within the fifth preset period of time; if so, the camping procedure is re-executed; otherwise, it indicates that the data traffic interruption problem has been solved, and the data connection recovery operations are ended.

At S611, waiting is continued.

Compared with the detection granularity of data traffic interruption based on Wi-Fi channels and cellular channels in the related technology, the detection granularity in this embodiment is reduced to PDU sessions. According to service requirements, the terminal device is configured to establish a plurality of PDU sessions with the network side on the Wi-Fi channel and the cellular channel.

Compared with detection on the data plane in the related technology, the range of detection is extended to the control plane in this embodiment, thus increasing the comprehensiveness and accuracy of data detection.

In the related technology, due to a coarse-grained detection, after data traffic interruption is detected, only data connection recovery can be performed, leading to limited accuracy. In contrast, in this embodiment, due to a fine-grained detection of the terminal device, after data traffic interruption is detected, service switching is performed to ensure service continuity, and the recovery operations are not performed until the number of PDU sessions in the data traffic interrupted state reaches a certain threshold. Therefore, it can enable a higher accuracy, a better fault tolerance performance, a reduced frequency of the data connection recovery operations, an increased ability and success rate of automatic recovery of PDU sessions with data traffic interruption, and an increased utilization rate of resources.

### Embodiment three

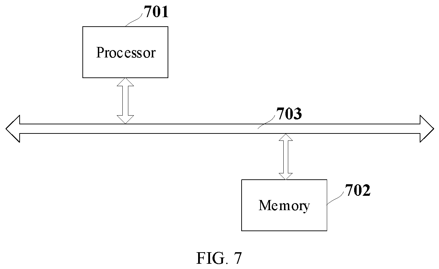

This embodiment further provides a terminal device, which includes, but not limited to, various mobile intelligent terminal devices, such as smart phones, IPADs, vehicle-on-board terminal devices, smart wearable devices, etc., and may also include non-mobile intelligent terminal devices. Referring to Fig. 7, the terminal device includes a processor 701, a memory 702, and a communication bus 703. The communication bus 703 is configured to realize connection and communication between the processor 701 and the memory 702. The processor 701 is configured to execute one or more computer programs stored in the memory 702 to implement at least one step of the recovery method for data traffic interruption illustrated in the various embodiments mentioned above.

This embodiment further provides a computer-readable storage medium, which includes a volatile or nonvolatile, removable or non-removable medium implemented in any method or technique for storing information (such as computer-readable instructions, data structures, computer program modules, or other data). The computer readable storage medium includes, but not limited to, Random Access Memory (RAM), Read-Only Memory (ROM), Electrically Erasable Programmable Read Only Memory (EEPROM), flash memory or other memory techniques, Compact Disc Read-Only Memory (CD-ROM), Digital Versatile Disc (DVD) or other optical disc storages, a magnetic cassette, a magnetic tape, a magnetic disc storage or other magnetic storage devices, or any other media that can be used to store desired information and can be accessed by computers.

The computer-readable storage medium in this embodiment may be configured to store one or more computer programs which, when executed by one or more processors, cause the one or more processors to implement at least one step of the method for interrupted data traffic recovery illustrated in the various embodiments mentioned above.

This embodiment further provides a computer program (or referred to as computer software), which may be distributed on a computer-readable medium and executed by a computing device to implement at least one step of the method for interrupted data traffic recovery illustrated in the various embodiments mentioned above. Moreover, in some cases, at least one step different from that shown in the method for interrupted data traffic recovery illustrated in the various embodiments mentioned above may be adopted.

It should be understood that in some cases, at least one step shown or described may be executed in a sequence different from that described in the aforementioned embodiments.

This embodiment further provides a computer program product, which includes a computer-readable device having the computer program shown above stored thereon. The computer-readable device in this embodiment may include the computer-readable storage medium shown above.

According to the recovery method for data traffic interruption, the terminal device and the storage medium provided by the embodiments of the present disclosure, since data traffic interruption is detected based on PDU sections, when it is detected that data traffic interruption occurs in a PDU session, it is determined whether the PDU session with data traffic interruption meets a session switching condition, instead of immediately reconnecting to the network for data connection recovery operations, and if so, the PDU session is switched. Based on these, reconnection to the network for the data connection recovery operations can be avoided, which in turn avoids the resetting of the other normal PDU sessions as a result of the data connection recovery operations, and the PDU session with data traffic interruption can be switched to another channel for normal operation, thereby increasing the efficiency and accuracy of data connection recovery, ensuring the continuity of a service, and increasing user experience satisfaction.

As can be seen, it should be appreciated by those having ordinary skills in the art that all or some of the steps in the methods, and the functional modules/units in the system and device disclosed above may be implemented as software (which can be implemented by computer program codes executable by a computing device), firmware, hardware and suitable combinations thereof. In a hardware implementation, the division of the functional modules/units mentioned above does not necessarily correspond to the division of physical components. For example, a physical component may have multiple functions, or a function or step may be executed by a plurality of physical components in cooperation. Some or all of the physical components may be implemented as software executed by a processor (such as a central processing unit, a digital signal processor, or a microprocessor), or as hardware, or as an integrated circuit (such as an Application-Specific Integrated Circuit).

Furthermore, it is well-known to those having ordinary skills in the art that communication media typically contain computer-readable commands, data structures, computer program modules or other data in a modulated data signal such as carriers or other transmission mechanisms, and may include any information delivery media. Therefore, the present disclosure is not limited to any particular combination of hardware and software.

The above is a further detailed description of the embodiments of the present disclosure made in conjunction with specific implementations, and it should not be considered that the specific implementation of the present disclosure is limited to the description. For those having ordinary skills in the art to which the present disclosure belongs, several simple deductions or substitutions can be made without departing from the concept of the present disclosure, all of which should be regarded as falling within the protection scope of the present disclosure.

## Claims

1. A recovery method for data traffic interruption, comprising
detecting data traffic interruption in a Protocol Data Unit, PDU, session;
determining whether the PDU session currently meets a session switching condition; and
in response to a determination that the PDU session currently meets the session switching condition, switching the PDU session.

2. The recovery method for data traffic interruption of claim 1, wherein detecting data traffic interruption in a PDU session comprises one of:
detecting that no response has been received from a network side within a first preset period of time after N data messages are consecutively sent to the network side in the PDU session, wherein N is greater than or equal to 1;
detecting that a Domain Name System, DNS, query corresponding to the PDU session has failed for M times within a second preset period of time, wherein M is greater than or equal to 1;
detecting that Packet Internet Groper, PING, detection corresponding to the PDU session has failed for K times within a third preset period of time, wherein K is greater than or equal to 1;
detecting that a number of data message retransmissions in the PDU session reaches a preset message retransmission threshold within a fourth preset period of time;
detecting that server detection corresponding to the PDU session fails; or
detecting a preset PDU Session Release Command message sent by the network side for the PDU session.

3. The recovery method for data traffic interruption of claim 1, wherein determining whether the PDU session currently meets a session switching condition comprises:
determining whether the PDU session is a Multi-Access, MA, PDU session supporting the access of a plurality of network channels; and
in response to a determination that the PDU session is an MA PDU session, determining whether an available network channel currently presents in the plurality of network channels supported by the PDU session.

4. The recovery method for data traffic interruption of claim 3, wherein determining whether an available network channel currently presents in the plurality of network channels corresponding to the PDU session comprises one of:
determining whether a network channel not labeled as in a data traffic interrupted state presents in the plurality of network channels corresponding to the PDU session;
determining whether a network channel with a normal packet loss rate presents in the plurality of network channels corresponding to the PDU session;
determining whether a network channel in which server detection is successful presents in the plurality of network channels corresponding to the PDU session;
determining whether a network channel in which PING detection is successful presents in the plurality of network channels corresponding to the PDU session; or
determining whether a network channel with a measurement result of network quality meeting a set network quality condition presents in the plurality of network channels corresponding to the PDU session.

5. The recovery method for data traffic interruption of claim 4, wherein the plurality of network channels corresponding to the PDU session include at least one of:
at least one cellular network channel; or
at least one non-cellular network channel.

6. The recovery method for data traffic interruption of any one of claims 1 to 5, further comprising:
in response to a determination that the PDU session currently does not meet the session switching condition, labeling the PDU session as in the data traffic interrupted state;
in response to the number of PDU sessions currently labeled as in the data traffic interrupted state reaching a preset data connection recovery threshold, performing data connection recovery;
or
in response to a determination that the PDU session currently does not meet the session switching condition, starting timing, and in response to a timing value reaching a preset time threshold and still detecting data traffic interruption in the PDU session, performing data connection recovery.

7. The recovery method for data traffic interruption of claim 6, wherein performing data connection recovery comprises performing at least one of the following data connection recovery operations according to a set data connection recovery rule:
turning off a data connection control switch, and then turning the data connection control switch on;
re-executing a camping procedure;
restarting a radio frequency module; or
restarting a modem.

8. The recovery method for data traffic interruption of claim 7, wherein the data connection recovery rule comprises a step-by-step execution rule, which comprises: after a current data connection recovery operation is performed in a preset sequence, detecting whether a PDU session with data traffic interruption presents within a fifth preset period of time, and in response to a presence of a PDU session with data traffic interruption within the fifth preset period of time, performing a next data connection recovery operation.

9. A terminal device, comprising a memory, a processor, and a communication bus connecting the memory with the processor;
wherein the memory stores one or more computer programs which, when executed by the processor, cause the processor to perform the recovery method for data traffic interruption of any one of claims 1 to 8.

10. A computer-readable storage medium, storing one or more computer programs which, when executed by one or more processors, cause the one or more processors to perform the recovery method for data traffic interruption of any of claims 1 to 8.
